(19)

(11) **EP 2 341 650 B1**

(12) **EUROPEAN PATENT SPECIFICATION**

(45) Date of publication and mention of the grant of the patent:
**21.03.2012 Bulletin 2012/12**

(51) Int Cl.:
***H04J 3/06*** *(2006.01)*

(21) Application number: **10305006.8**

(22) Date of filing: **05.01.2010**

(54) **Transfer of a synchronization message through a packet radio network**

Übertragung einer Synchronisierungsnachricht durch ein Paketfunknetzwerk

Transfert d'un message de synchronisation via un réseau radio par paquets

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**06.07.2011 Bulletin 2011/27**

(73) Proprietors:
- **Alcatel Lucent**
  **75007 Paris (FR)**
- **Politecnico Di Milano**
  **20133 Milano (IT)**

(72) Inventors:
- **Pasotti, Marco**
  **25067 Lumezzane (IT)**
- **Vodola, Francesco**
  **20038 Seregno (IT)**
- **Spalvieri, Arnaldo**
  **20100 Milano (IT)**
- **Barzaghi, Giorgio**
  **20056 Grezzago (IT)**
- **Gerosa, Marzio**
  **20038 Seregno (IT)**
- **De Blasio, Giuseppe**
  **00135 Roma (IT)**

(74) Representative: **Schmidt, Werner Karl**
**Alcatel-Lucent**
**Intellectual Property & Standards**
**Lorenzstrasse 10**
**70430 Stuttgart-Zuffenhausen (DE)**

(56) References cited:
**US-A1- 2005 058 159** **US-A1- 2005 207 387**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention generally relates to the field of radio communication networks. In particular, the present invention relates to transfer of a synchronization message through a packet radio network.

### Background Art

In a packet-switched communication network, two or more nodes may synchronize each other according to a master-slave scheme by exchanging synchronization messages. In particular, the synchronization messages allow one or more slave nodes to synchronize the frequency of their local clock and/or the time of the day (i.e. hours, minutes, seconds and possible fractions of seconds) of their local clock to a master node.

For a packet-switched communication network, for example an Ethernet network, network protocols are known implementing the synchronization, such as the IEEE 1588™-2008 protocol which is defined in document "IEEE Standard for a Precision Clock Synchronization Protocol for Networked Measurements and Control Systems" by IEEE Instrumentation and Measurements Society, July 24, 2008.

According to IEEE 1588™-2008 protocol (see document cited above, chapter 6, paragraph 6.6.3, pp. 32-34), the master node sends a Sync message to a slave node and generates a first timestamp t1 indicating the time at which the master node sends the Sync message. The first timestamp t1 is sent to the slave node within the Sync message itself or within a Follow-Up message that the master node sends to the slave node after the Sync message. The slave node in turn receives the Sync message and generates a second timestamp t2 indicating the time at which the slave node receives the Sync message. The slave node then sends to the master node a Delay_Req message and generates a third timestamp t3 indicating the time at which the slave node sends such message. The master node receives the Delay_Req message and generates a fourth timestamp t4 indicating the time at which it receives such message and in turn sends to the slave node the fourth timestamp t4 within a Delay_Resp message.

At the end of the messages exchange described above, the four timestamps t1, t2, t3, t4 are available at the slave node. The above described message exchange is typically periodically repeated. By using one or more of the four timestamps t1, t2, t3, t4, the slave node is able to synchronize the frequency and the time of the day of its local clock to those of the master node local clock.

In particular, according to IEEE 1588™-2008 protocol (see the document cited above, chapter 12, paragraph 12.1.2, pp. 122-123), the slave node adjusts the frequency of its local clock by using a frequency factor equal to the ratio of the difference between two successive second timestamps t2 to the difference between two successive first timestamps t1.

Typically, the synchronization messages sent by the master (slave) node are received at the slave (master) node with a delay due to the message propagation on the links and to the message residence within the intermediate nodes. Such delay is affected by not predictable variations which are mainly due to the fact that the residence time of the synchronization messages within the intermediate nodes varies in a not predictable way according to the traffic conditions inside the packet-switched network. The greater the variations of the synchronization message delay, the lower the accuracy of the synchronization recovery by the slave node.

On the other hand, the traffic on the link connecting the master node and the slave node is typically asymmetric. This means that the delay that the synchronization messages experience in the master-to-slave direction is different from the delay that the synchronization messages experience in the slave-to-master direction. The higher the difference of the message delay in the directions master-to-slave and slave-to-master, the lower the accuracy of the time of the day recovery by the slave node. Moreover, also this difference varies in a not predictable way.

The IEEE 1588™-2008 protocol provides for implementing a "transparent clock" mechanism (see chapter 6, paragraph 6.5.4 of the document cited above) at the nodes of the packet-switched network. This mechanism provides for measuring, at a node receiving a IEEE 1588™-2008 protocol message, a residence time of such message within the node. The residence time is written in a Correction Field of the synchronization message header. In order to estimate the overall delay of the synchronization message, each network node comprised in the synchronization message path computes the residence time of the synchronization message and updates the Correction Field by suitably incrementing the value contained therein. The slave node receives the synchronization message and, according to the value contained in the Correction Field, adjusts the value of the timestamp carried by the synchronization message.

The above described IEEE 1588™-2008 protocol can be used in a radio mobile access system comprising a radio network controller, a number of base stations and a backhauling wireless network connecting the radio network controller and the base stations. In this scenario, the base stations (which act as slave nodes) synchronize to the radio network controller (which acts as master node) by exchanging the above described messages through the backhauling wireless network. More particularly, the radio network controller and the base stations comprise dedicated apparatuses configured to act as master node and slave nodes, respectively.

US 2005/0207387 A1 discloses a time control mechanism that accepts samples of time (true or otherwise) over a network, and enables dynamic compensation for random delays of the network in order to maintain the output of a slave clock that the time control mechanism controls within required bounds relative to the time of a master clock, even when the samples are randomly delayed.

US 2005/0058159 A1 discloses that a master Timestamp Synchronization Circuit (TSC) in a Cable Modem Termination System (CMTS) estimates a master timestamp value for an upcoming time reference. The master TSC sends the master timestamp value asynchronously over an Internet Protocol (IP) network to slave TSCs in other CMTSs. The slave TSC compares a local timestamp value with the master timestamp value when the upcoming time reference occurs. If the local timestamp value does not match the master timestamp value, the slave TSC is resynchronised using the master timestamp value.

## Summary of the invention

The inventors have noticed that the transparent clock mechanism allows to consider the delay accumulated by the synchronization message and to reduce accordingly the effect of the delay variation due to the message residence within the nodes.

However, disadvantageously, the transparent clock mechanism requires that all the packet-switched network nodes are equipped with hardware and/or software resources configured to support such mechanism. This disadvantageously leads to high costs for the mechanism implementation, as it is necessary to modify all the network nodes. Moreover, this way, all the network nodes have a more complex structure. This disadvantageously leads to increasing the maintenance costs of the network.

Furthermore, as mentioned above, according to the transparent clock mechanism, each node must compute the residence time and write it in the Correction Field at the time at which the synchronization message is forwarded to the next node, i.e. at the output physical interface of the node. If the packet-switched network is a wireless packet-switched network, the output physical interface of the node is a radio physical interface. This radio interface typically comprises functional blocks (e.g. scrambler, encoder, interleaver, modem, etc.) that are transparent and agnostic with respect to the Correction Field and the time stamps carried by the synchronization messages, since they merely act at the radio physical layer. Disadvantageously, the Correction Field is written before the synchronization message is processed by the radio interface. This disadvantageously implies that the residence time written in the Correction Field does not take into account the variable delay introduced by processing of the synchronization messages at the radio interface.

Accordingly, the inventors have addressed the problem of providing a method for transferring a synchronization message through a wireless packet-switched communication network which overcomes the aforesaid drawbacks.

In particular, the inventors have addressed the problem of providing a method for transferring a synchronization message through a wireless packet-switched communication network, allowing the slave node to recover the synchronization in a reliable and accurate way and, at the same time, requiring a lower amount of additional resources at the nodes of the packet-switched network with respect to the amount required for implementing the known transparent clock mechanism.

According to a first aspect, the present invention provides a method for transferring a synchronization message from a master node to a slave node through a packet-switched network, the method comprising the steps of:

a) providing a reference clock signal to an ingress node and to an egress node of the packet-switched network;

b) at the ingress node, receiving the synchronization message from the master node, generating an ingress timestamp based on the reference clock signal, and sending the synchronization message with the ingress timestamp to the egress node; and

c) at the egress node, receiving the synchronization message and the ingress timestamp, generating an egress timestamp based on the reference clock signal, computing a transit time as a difference between the egress timestamp and the ingress timestamp and sending the synchronization message and the transit time to the slave node.

Preferably, step b) comprises receiving the reference clock signal, processing the reference clock signal for generating a first local clock signal having a first period, and providing an ingress time counter counting a number of periods of the first local clock signal, and step c) comprises receiving the reference clock signal, processing the reference clock signal for generating a second local clock signal having a second period, and providing an egress time counter counting a number of periods of the second local clock signal, the first period being substantially equal to the second period.

Preferably, in step b), generating comprises reading a first current value of the ingress time counter and generating the ingress timestamp having the first current value, and in step. c), generating comprises reading a second current value of the egress time counter and generating the egress timestamp having the second current value.

Preferably, counting a number of periods of the first local clock signal is started at a first starting time, and counting a number of periods of the second local clock signal is started at a second starting time, a difference between the first starting time and the second starting time being equal to an offset between the ingress time counter and the egress time counter.

Preferably, the method further comprises a step, which is performed substantially in parallel to steps b) and c), of reducing or cancelling the offset.

According to first advantageous variants, the step of reducing or cancelling the offset comprises providing the ingress node and the egress node with a global positioning system time-of-the-day information.

According to second advantageous variants, the step of reducing or cancelling the offset comprises exchanging at least one alignment message between the ingress node and an intermediate node of the packet-switched network adjacent to the ingress node.

Preferably, according to these second advantageous variants, step a) further comprises providing the reference clock signal to an intermediate node of the packet switched network, the method further comprising, at the intermediate node:

- receiving the reference clock signal;
- processing the reference clock signal for generating a third local clock signal having a third period, the third period being substantially equal to the first period and the second period;
- providing an intermediate time counter counting a number of periods of the third local clock signal, the counting being started at a third starting time, a difference between the third starting time and the first starting time being equal to a further offset between the intermediate time counter and the ingress time counter.

Preferably, the step of exchanging at least one alignment message between the ingress node and the intermediate node comprises cyclically repeating the following sub-steps:

- at the ingress node, generating a first timestamp T1 equal to a third current value of the ingress time counter and sending a first alignment message to the intermediate node;
- at the ingress node, sending a second alignment message containing the first timestamp T1 to the intermediate node;
- at the intermediate node, upon reception of the first alignment message, generating a second timestamp T2 equal to a fourth current value of the intermediate time counter and, upon reception of the second alignment message, extracting the first timestamp T1 from the second alignment message;
- at the intermediate node, sending a third alignment message to the ingress node and, substantially at the same time, generating a third timestamp T3 equal to a fifth current value of the intermediate time counter;
- at the ingress node, upon reception of the third alignment message, generating a fourth timestamp T4 equal to a sixth current value of the ingress time counter, and sending to the intermediate node a fourth alignment message comprising the fourth timestamp T4;
- at the intermediate node, upon reception of the fourth alignment message, extracting the fourth timestamp T4 from the fourth alignment message and computing an average one-way delay D1 by means of the following equation:

$$D1 = \frac{(T2 - T1) + (T4 - T3)}{2}$$

  and a still further offset TO1 by means of the following equation:

$$TO1 = (T2 - T1) - D1 = \frac{(T2 - T1) - (T4 - T3)}{2};$$

- at the intermediate node, writing the average one-way delay D1 in a FIFO buffer having size N, and writing the still further offset TO1 in a further FIFO buffer having the size N;
- at the intermediate node, determining a minimum delay D* in the FIFO buffer, and determining a corresponding offset TO* corresponding to the minimum delay D* in the further FIFO buffer; and
- at the intermediate node, using the corresponding offset TO* in order to reduce the further offset between the intermediate time counter and the ingress time counter.

Preferably, in step b), sending comprises encapsulating the synchronization message and the ingress timestamp in a transfer message, and in step c) receiving comprises extracting the synchronization message and the ingress timestamp from the transfer message.

Preferably, in step b) sending comprises inserting the ingress timestamp in a body of the synchronization message, and in step c) receiving comprises extracting the ingress timestamp from the body of the synchronization message.

Preferably, in step c) sending comprises writing the transit time in an adjusting field of a header of the synchronization message.

According to a second aspect, the present invention provides a communication system comprising a packet-switched network, a master node and a slave node, the packet-switched network comprising an ingress node connected to the master node and an egress node connected to the slave node, the communication system further comprising a synchronization source apparatus cooperating with the packet-switched network, wherein:

- the synchronization source apparatus is configured to provide a reference clock signal to the ingress node and to the egress node;
- the master node is configured to transmit a synchronization message to the slave node through the ingress node and the egress node;
- the ingress node is configured to receive the synchronization message from the master node, to generate an ingress timestamp based on the reference clock signal, and to send the synchronization message with the ingress timestamp to the egress node; and
- the egress node is configured to receive the synchronization message and the ingress timestamp from the ingress node, to generate an egress timestamp based on the reference clock signal, to compute a transit time as a difference between the egress timestamp and the ingress timestamp and to send the synchronization message and the transit time to the slave node.

Preferably, the synchronization source apparatus is a node of the packet-switched network or an apparatus cooperating with the packet-switched network.

Preferably, the ingress node comprises an ingress local oscillator and an ingress time counter connected to the ingress local oscillator, wherein the ingress local oscillator is configured to receive the reference clock signal and to process the reference clock signal for generating a first local clock signal having a first period, and wherein the ingress time counter is configured to count a number of periods of the first local clock signal, and the egress node comprises an egress local oscillator and an egress time counter connected to the egress local oscillator, wherein the egress local oscillator is configured to receive the reference clock signal and to process the reference clock signal for generating a second local clock signal having a second period, and wherein the egress time counter is configured to count a number of periods of the second local clock signal.

## Brief description of the drawings

Embodiments of the invention will be better understood by reading the following detailed description, given by way of example and not of limitation, to be read with reference to the accompanying drawings, wherein:

- Figure 1 schematically shows a communication system comprising a master node, a slave node and a wireless packet-switched network, according to a first embodiment of the present invention;
- Figure 2 is a schematic time diagram of the time counters at the ingress node and the egress node of the wireless packet-switched network;
- Figures 3a, 3b and 3c schematically show the format of the synchronization messages sent by the master node to the slave node according to an advantageous variant of the present invention;
- Figure 4 schematically shows a communication system comprising a master node, a slave node and a wireless packet-switched network, according to a second embodiment of the present invention;
- Figure 5 is a flow chart of the messages exchange between the ingress node and an intermediate node of the packet-switched network of Figure 4, according to the second embodiment of the present invention; and
- Figure 6 is a schematic time diagram of the time counters at the ingress node and at the intermediate node of the packet-switched network of Figure 4, according to the second embodiment of the present invention.

## Detailed description of preferred embodiments of the invention

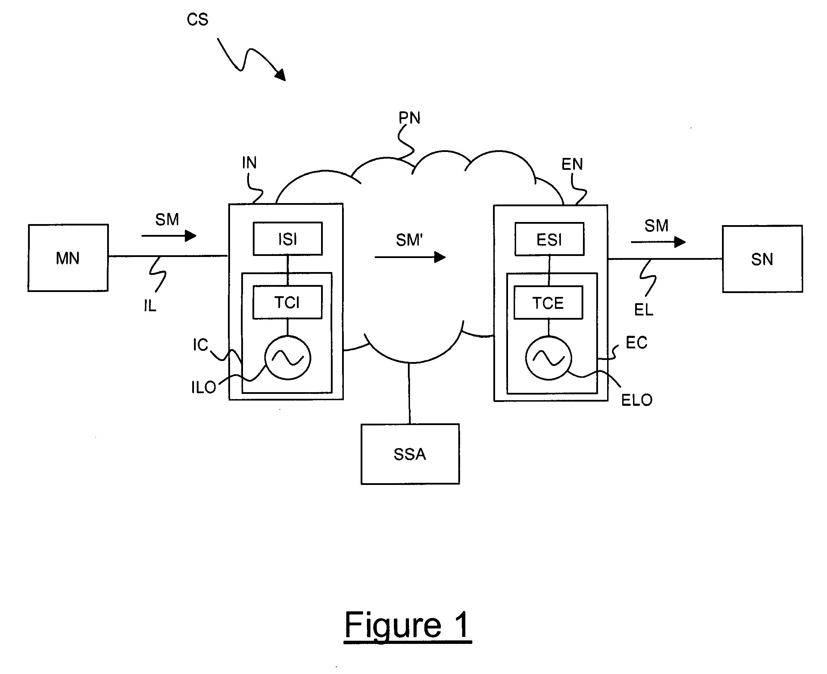

Figure 1 schematically shows a communication system CS, comprising a master node MN, a slave node SN and a packet-switched network PN connecting the master node MN and the slave node SN. The communication system CS further comprises a synchronization source apparatus SSA. The synchronization source apparatus SSA may be a node of the packet-switched network PN or an external apparatus cooperating with the packet-switched network PN and connected to one or more nodes of the packet-switched network PN.

For example, the communication system CS can be a radio mobile access system. In such a case, the master node MN is, for example, a radio network controller (RNC) node, the slave node SN is a radio base station and the packet-switched network PN is a wireless backhauling network.

The slave node SN is configured to synchronize its local clock frequency and/or its local clock time of the day to the master node MN. In particular, the master node MN and the slave node SN are preferably configured to exchange synchronization messages through the packet-switched network PN according to a network protocol implementing the synchronization, such as for example, the IEEE 1588™-2008 protocol cited above.

The packet-switched network PN preferably comprises an ingress node IN, an egress node EN and one or mode intermediate nodes (not shown in Figure 1). The ingress node IN is a peripheral node which is connected to the master node MN through an ingress link IL and the egress node EN is a peripheral node which is connected to the slave node SN through an egress link EL. The packet-switched network PN is for example a wireless Ethernet network.

Preferably, both the ingress link IL and the egress link EL are bi-directional links. Preferably, both the ingress link IL and the egress link EL are wired links. Further, according to a variant not shown in the drawings, the ingress link IL and the egress link EL may be replaced by two further communication networks by means of which the ingress node IN and the egress node EN are connected to the master node MN and slave node SN, respectively.

Preferably, the ingress node IN is configured to receive from the master node MN synchronization messages through the ingress link IL and to forward such synchronization messages to one of the intermediate nodes of the packet-switched network PN. Moreover, the ingress node IN is configured to receive synchronization messages from one or more intermediate nodes of the packet-switched network PN and to forward such synchronization messages to the master node MN through the ingress link IL.

Preferably, the egress node is configured to receive synchronization messages from one or more intermediate nodes of the packet-switched network PN and to forward such synchronization messages to the slave node SN through the egress link EL. Moreover, the egress node EN is configured to receive from the slave node SN synchronization messages through the egress link EL and to forward such synchronization messages to one of the intermediate nodes of the packet-switched network PN.

According to preferred embodiments of the present invention, the ingress node IN comprises an ingress local clock IC and an ingress synchronization interface ISI connected to the ingress local clock IC. In turn, the ingress local clock IC comprises an ingress local oscillator ILO and an ingress time counter TCI connected to the ingress local oscillator ILO. The egress node EN preferably comprises an egress local clock EC and an egress synchronization interface ESI, connected to the egress local clock EC. In turn, the egress local clock EC comprises an egress local oscillator ELO and an egress time counter TCE connected to the egress local oscillator ELO.

The synchronization source apparatus SSA is preferably configured to generate a reference clock signal, that is propagated across the packet-switched network PN so that at least the ingress local oscillator ILO and to the egress local oscillator ELO of the ingress node IN and of the egress node EN, respectively, receive it. More preferably, the local oscillators of all the nodes of the packet-switched network PN receive the reference clock signal.

Preferably, the ingress local oscillator ILO and the egress local oscillator ELO are adapted for processing the reference clock signal in order to generate respective clock signals having periods cpI and cpE. The periods cpI and cpE are preferably substantially equal. The periods cpI and cpE are preferably equal to a fraction of a second, for example few nanoseconds.

Preferably, the ingress time counter TCI is configured to count the number of periods of the clock signal of the ingress local oscillator ILO, starting from a starting time stI. Likewise, the egress time counter TCE is configured to count the number of periods of the clock signal of the egress local oscillator ELO starting from a starting time stE.

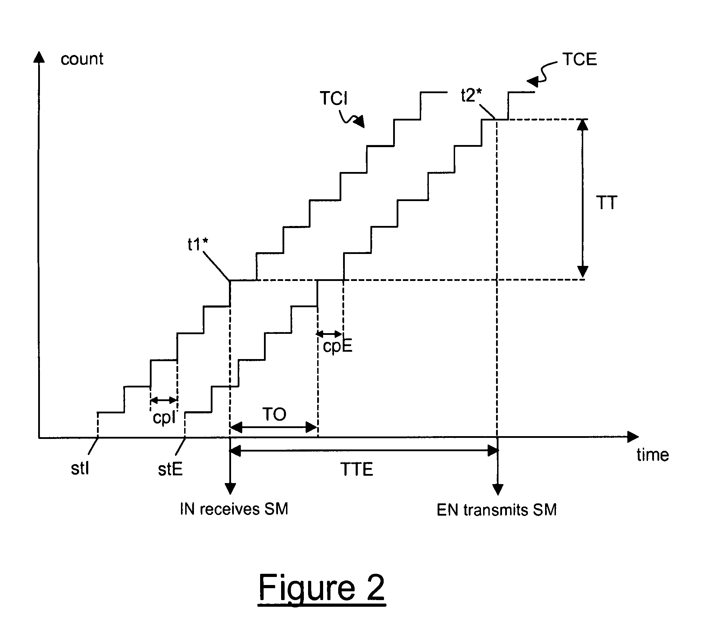

Figure 2 schematically shows the values of the ingress time counter TCI and of the egress time counter TCE as a function of time. The values of each of the ingress time counter TCI and the egress time counter TCE as a function of time are schematically represented, for sake of simplicity, by respective monotonic rising and piecewise constant curves. Such curves represent the number of the clock signal periods which are counted starting from the starting time stI or stE. At each period cpI or cpE, this number is incremented by one.

Since, as mentioned above, the periods cpI and cpE are substantially equal, in Figure 2 the two curves corresponding to the ingress time counter TCI and the egress time counter TCE are substantially parallel. If the starting times stI and stE are different, the ingress time counter TCI and the egress time counter TCE are misaligned in time by an offset TO. Since the periods cpI and cpE are substantially equal, the offset TO is substantially constant and it is substantially equal to stE-stI.

The ingress synchronization interface ISI and the egress synchronization interface ESI are preferably hardware and/or software modules adapted for processing the synchronization messages received by the ingress node IN and the egress node EN, respectively, as it will be explained in greater detail herein after.

With reference to Figure 1, herein after the operation of the communication system CS will be described in detail. For sake of simplicity, only the case in which a synchronization message is sent from the master node MN to the slave node SN will be considered. However, this is not limiting since the operation of the communication system CS in the opposite direction is the same.

It is assumed, for example, that the master node MN generates a synchronization message SM in order to send a timestamp to the slave node SN.

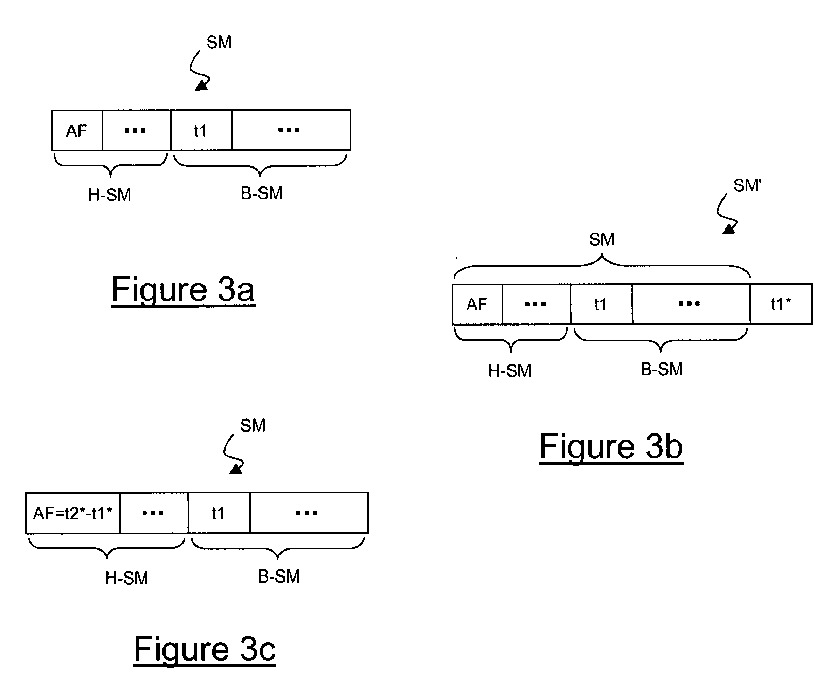

Figure 3a shows the format of the synchronization message SM. The synchronization message SM preferably comprises a header H-SM and a body B-SM. The header H-SM preferably comprises an adjusting field AF suitable for containing a transit time, as it will be explained in greater detail herein after. The body B-SM preferably comprises the timestamp. Preferably, the synchronization message SM is a IEEE 1588™-2008 protocol message. In this case, preferably, the adjusting field AF is the Correction Field defined by to IEEE 1588™-2008 protocol. For example, the synchronization message SM can be a Sync or Follow-Up message carrying the first timestamp t1, as it is shown in Figure 3a by way of example. Alternatively, the synchronization message SM can be a Delay_Resp message carrying the fourth timestamp t4.

As shown in Figure 1, the master node MN sends the synchronization message SM to the ingress node IN of the packet-switched network PN through the ingress link IL. Preferably, when the synchronization message SM reaches the ingress node IN, the ingress synchronization interface ISI of the ingress node IN reads the current value t1* of the ingress time counter TCI and generates an ingress timestamp having the value t1*. It is to be noticed that, since the ingress link IL is wired, the delay between the time at which the synchronization message SM is received at the ingress node IN and the time at which the ingress timestamp with the value t1* is generated can advantageously be estimated a priori or is negligible.

At this time, the ingress synchronization interface ISI preferably encapsulates the synchronization message SM in a transfer message SM' which further comprises the ingress timestamp with the value t1*. The format of the transfer message SM' is shown in Figure 3b. Alternatively, the ingress timestamp with the value t1* may be inserted into the body B-SM of the synchronization message SM. In case the synchronization message SM comprises a frame check sequence, this frame check sequence is recalculated after the ingress timestamp with the value t1* has been inserted into the body B-SM.

Next, the ingress node IN sends the transfer message SM' which, through the intermediate nodes of the packet-switched network PN, reaches the egress node EN of the packet-switched network PN. Preferably, each of the intermediate nodes receives the transfer message SM' from the preceding intermediate node and forwards it to the next intermediate node without performing any processing of the ingress timestamp with the value t1*.

When the egress node EN receives the transfer message SM', the egress synchronization interface ESI preferably reads the ingress timestamp with the value t1*, extracts the synchronization message SM and terminates the transfer message SM'. The egress synchronization interface ESI then preferably reads the current value t2* of the output of the egress time counter TCE and generates an egress timestamp with the value t2*. Then it computes a transit time TT as the difference between such egress timestamp and the ingress timestamp, i.e. the difference t2*-t1*, and writes this difference in the adjusting field AF of the header H-SM of the synchronization message SM. Next, the egress node EN sends the synchronization message SM to the slave node SN through the egress link EL. It is to be noticed that, since the egress link EL is wired, the delay between the time at which the egress timestamp with the value t2* is generated and the time at which the synchronization message SM is sent by the egress node EN may be advantageously estimated a priori or is negligible.

As shown in Figure 2, the transit time TT depends both on the actual transit time TTE (i.e. the time interval elapsed between the time at which the synchronization message SM has been received by the ingress node IN and the time at which the synchronization message SM has been sent by the egress node EN) and on the offset TO between the egress time counter TCE and the ingress time counter TCI. In particular, the transit time TT is substantially equal to the difference between the actual transit time TTE and the offset TO. In Figure 2, for example, the offset TO is positive since the egress time counter TCE is delayed with respect to the ingress time counter TCI. Therefore, in this situation, the transit time TT which is computed by the egress node EN is lower that the actual transit time TTE.

When the slave node SN receives the synchronization message SM, it preferably reads both the synchronization information contained therein (i.e. the timestamp t1) and the content of the adjusting field AF which contains the transit time TT. Thus, preferably, the slave node SN uses the transit time TT to adjust the value of the timestamp t1 so as to synchronize the frequency of its local clock to the frequency of the local clock of the master node MN. This operation is similar to the operation defined in the IEEE 1588™-2008 protocol, and it does not fall within the scope of the present invention.

Advantageously, even of the transit time TT is not equal to the actual transit time TTE, the slave node SN is nevertheless able to accurately synchronize the frequency of its local clock to the frequency of the local clock of the master node MN.

Indeed, as described above, in order to synchronize the frequency of its local clock, the slave node SN uses a frequency factor which depends on the difference between two successive first timestamps t1 "-t1' received from the master node MN. According to the first embodiment of the present invention, the slave node SN receives a synchronization message (similar to the message SM) comprising the first timestamp t1' and a first transit time TT', and a successive synchronization message (similar to the message SM) comprising a successive first timestamp t1" and a second transit time TT". The slave node SN preferably adjusts the values of the two first timestamps t1" and t1' by subtracting from each of them the respective transit time TT" and TT'. Since, as mentioned above, each of the first and second transit times TT" and TT' comprises the offset TO, which is substantially equal for TT" and TT', the difference between the adjusted values of the two first timestamps t1" and t1' does not depend on the offset TO.

Therefore, advantageously, the method described above allows considering the delay that each synchronization message experiences when it passes through the packet-switched network PN and thus mitigating the effect of the delay variation experienced by messages through the packet-switched network PN. This allows the slave node SN to reliably and accurately recover the frequency synchronization of its local clock.

Finally, advantageously, transferring the synchronization message as described above requires that only the ingress node IN and the egress node EN of the packet-switched network PN are provided with the respective ingress synchronization interface ISI and the respective egress synchronization interface ESI. This advantageously implies that the above described transferring of synchronization messages through the packet-switched network PN is implemented by adding to the packet-switched network PN an amount of resources which is lower than the amount required to implement the known transparent clock mechanism.

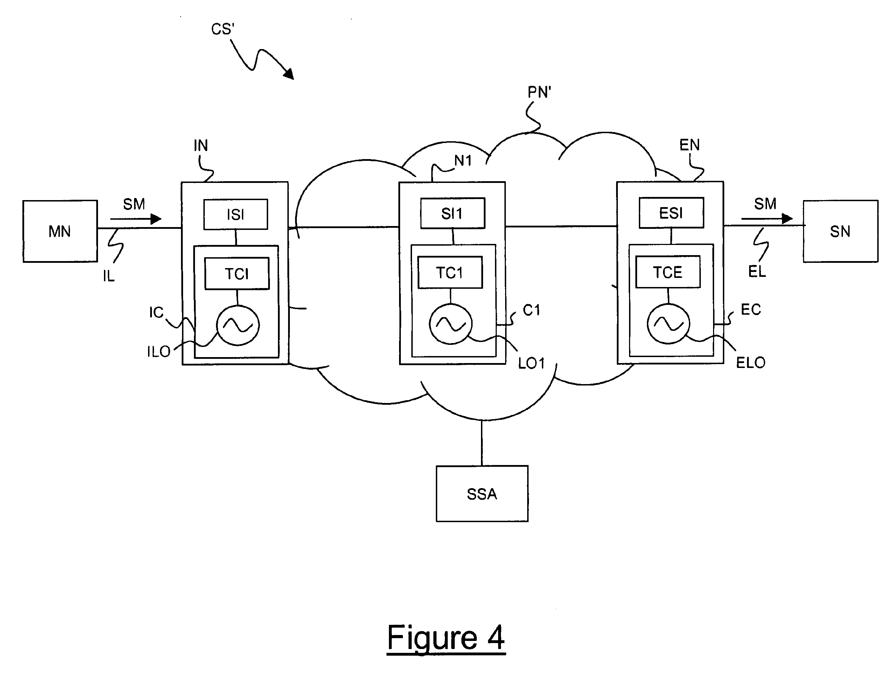

Figure 4 shows a communication system CS' according to a second embodiment of the present invention. The communication system CS' is substantially equal to the communication system CS, except for the fact that the packet-switched network PN is substituted by a packet-switched network PN'. The packet-switched network PN', in turn, is substantially equal to the packet-switched network PN, except for the fact that an intermediate (i.e. not peripheral) node N1 thereof has similar structure with respect to the ingress node IN and the egress node EN. More preferably, each intermediate node of the packet-switched network PN' has similar structure with respect to the ingress node IN and the egress node EN.

In particular, the intermediate node N1 preferably comprises an intermediate local clock C1 and an intermediate synchronization interface SI1 connected to the intermediate local clock C1. In turn, the intermediate local clock C1 comprises an intermediate local oscillator LOI and an intermediate time counter TC1 connected to the intermediate local oscillator LO1 Preferably, in the communication system CS' of Figure 4, the synchronization source apparatus SSA is configured to provide the reference clock signal also to the intermediate local oscillator LO1 of the intermediate node N1, possibly through other nodes of the packet-switched network PN'. More preferably, the synchronization source apparatus SSA is configured to distribute the reference clock signal to all the nodes of the packet-switched network PN. The intermediate local oscillator LO1 is preferably adapted for processing the reference clock signal in order to generate a clock signal with a period cp1 substantially equal to the periods cpl and cpE. Preferably, the intermediate time counter TC1 is configured to count the number of periods of the clock signal of the intermediate local oscillator LO1 starting from a starting time st1 generally different from the starting times stl and stE from which the ingress time counter TCI and the egress time counter TCE start.

According to the second embodiment of the present invention, the ingress node IN, the intermediate node N1 and the egress node EN two by two exchange alignment messages in order to reduce or even cancel the offset between the respective time counters TCI, TC1 and TCE. In particular, to this purpose, one of the time counters TCI, TC1, TCE is chosen as reference time counter and the offset of the other two with respect to the reference time counter is reduced.

With reference to Figure 4, it is assumed that, for example, the reference time counter is the ingress time counter TCI. As mentioned above, the offset between the egress time counter TCE and the ingress time counter TCI is TO, which has an initial value equal to stE-stI. It is further assumed that TO' is the offset between the intermediate time counter TC1 and the ingress time counter TCI, which has an initial value equal to st1-stI.

The ingress node IN and the intermediate node N1 preferably set a bi-directional exchange of alignment messages thanks to which the intermediate node N1 reduces the offset of its time counter TC1 with respect to the ingress time counter TC1.

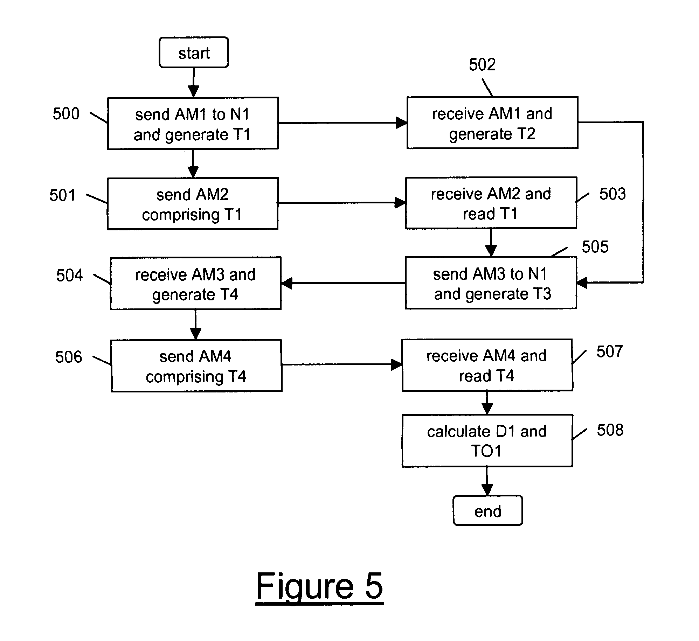

Figure 5 schematically shows the exchange of alignment messages mentioned above. The exchange of alignment messages between the ingress node IN and the intermediate node N1 preferably comprises the flowing steps:

500) the ingress synchronization interface ISI generates a timestamp T1 equal to the current value of the ingress time counter TCI and the ingress node IN preferably sends a first alignment message AM1. Optionally, the first alignment message AM1 comprises the timestamp T1 (this option is not shown in Figure 5);

501) if first alignment message AM1 does not comprise the timestamp T1, the ingress node IN preferably sends a second alignment message AM2 containing the timestamp T1 to the intermediate node N1;

502) the intermediate node N1 preferably receives the first alignment message AM1 and, substantially at the same time, the intermediate synchronization interface SI1 generates a timestamp T2 equal to the current value of the intermediate time counter TC1. If the first alignment message AM1 comprises the timestamp T1, during step 502 the intermediate synchronization interface SI1 further extracts the timestamp T1 from the first alignment message AM1 (option not shown in Figure 5);

503) if first alignment message AM1 does not comprise the timestamp T1, the intermediate node N1 preferably receives the second alignment message AM2 and the intermediate synchronization interface SI1 extracts the timestamp T1 from the second alignment message AM2;

504) the intermediate node N1 preferably sends a third alignment message AM3 to the ingress node IN and, substantially at the same time, the intermediate synchronization interface SI1 generates a timestamp T3 equal to the current value of the intermediate time counter TC1;

505) the ingress node IN preferably receives the third alignment message AM3 and, substantially at the same time, the ingress synchronization interface ISI generates a timestamp T4 equal to the current value of the ingress time counter TCI;

506) the ingress node IN preferably sends to the intermediate node N1 a fourth alignment message AM4 comprising the timestamp T4;

507) the intermediate node N1 receives the fourth alignment message AM4 and the intermediate synchronization interface SI1 extracts the timestamp T4 from the fourth alignment message AM4;

508) the intermediate node N1 preferably computes an average one-way delay D1 by means of the following equation:

$$D1 = \frac{(T2 - T1) + (T4 - T3)}{2} \qquad [1]$$

and an offset TO1 by means of the following equation:

$$TO1 = (T2 - T1) - D1 = \frac{(T2 - T1) - (T4 - T3)}{2} \qquad [2]$$

Preferably, the steps 500-508 are periodically repeated. A lower repetition period advantageously allows reducing the final offset between the intermediate time counter TC1 and the ingress time counter TCI. Alternatively, the steps 500-508 are repeated not periodically.

At each repetition, the average one-way delay is written in a FIFO buffer having size N. Correspondingly, the offset is written in a further FIFO buffer having the same size N. When less than N repetitions have been performed, the FIFO buffer is partially full. After N repetitions, the FIFO buffer is completely full. Preferably, when steps 500-508 are repeated for the N+1-th time, a new average one-way delay ON+1 is written in the FIFO buffer and the average one-way delay D1 written first in the FIFO buffer is removed.

Each time a new value of the average one-way delay is written in the FIFO buffer, the intermediate node N1 preferably determines a minimum delay D* amongst the average one-way delay values currently contained in the FIFO buffer. Then, the intermediate node N1 determines an offset TO* corresponding to the minimum delay D*. Then, the intermediate node N1 uses the offset value TO* in order to reduce the offset between the intermediate time counter TC1 and the ingress time counter TCI.

The offset TO* thus determined is advantageously the nearest, amongst the values currently stored in the further FIFO buffer, to the actual offset TO'. Indeed, as it can be observed in the above equation [2], the more similar the average one-way delay computed according to the equation [1] is to the delay actually accumulated in the one-way direction, the more accurate the estimate of the offset between the intermediate time counter TC1 and the ingress time counter TCI is. However, this is more likely to happen when the traffic on the link between the intermediate node N1 and the ingress node IN is low, i.e. when the delay is a minimum. It is to be noticed that the packet-switched network PN is intrinsically symmetric (i.e. the capacity of each link is the same in both directions). This guarantees that the minimum delay is also symmetric, i.e. it is the same in both directions.

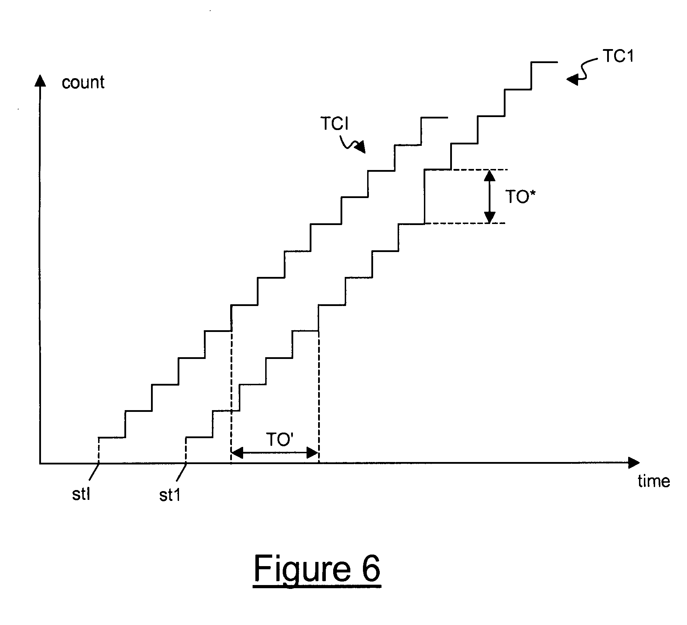

Then, the intermediate node N1 preferably sums the value of the offset TO* to the current value of the intermediate time counter TC1, as shown in Figure 6. If the offset TO* is equal to the actual offset TO' (i.e. st1-stl), this operation allows aligning the intermediate time counter TC1 and the ingress time counter TCI. If, on the contrary, as shown on Figure 6, the offset TO* is different from the actual offset TO' (i.e. st1-stl), this operation allows anyway reducing (but not cancelling) the offset between the intermediate time counter TC1 and the ingress time counter TCI.

At each successive repetition of steps 500-508, the offset can be further reduced. The offset thus decreases in time and, with a not predictable number of repetitions of steps 500-508, it can be cancelled so that the intermediate time counter TC1 and the ingress time counter TCI are aligned.

Next, the intermediate node N1 and the egress node EN preferably set a bi-directional exchange of alignment messages thanks to which the egress node EN reduces the offset between the egress time counter TCE and the intermediate time counter TC1. The messages exchange and the successive processing of their content by the egress node EN is identical to what has been described above with reference to Figure 5. Therefore, a detailed description will not be repeated here.

As a result of the exchanges of alignment messages described above, the intermediate time counter TC1 and the egress time counter TCE gradually reduce their offset with respect to the ingress time counter TCI and, within a not predictable time interval, they can align with respect to the ingress time counter TCI.

Preferably, the ingress node IN may decide to restart the alignment procedure and accordingly send to the nodes that are aligning their time counters with it suitable commands to reset their FIFO buffers and their further FIFO buffers. In this case, the ingress node IN preferably sends to the intermediate node N1 (for instance embedded in one of the alignment messages exchanged with the intermediate node N1) a command to restart the alignment procedure. The intermediate node N1 preferably propagates this command to the egress node EN within one of the alignment messages exchanged with the egress node EN. In case all the nodes of the packet-switched network PN' are configured for supporting the above alignment procedure, the command is propagated node by node from the ingress node IN through the whole packet-switched network PN'. According to a further advantageous variant, the command to restart the alignment procedure may be manually input by an operator at a node (either the ingress node IN or a further node) of the packet-switched network PN'. In this case, preferably, the command is then propagated by the node receiving the manual command to the nodes that are trying to align their time counters to the time counter of that node.

With reference to Figure 4, it is assumed now that the master node MN sends a synchronization message SM (e.g. a Sync message containing a first timestamp t1 according to the IEEE 1588™-2008 protocol) to the ingress node IN of the packet-switched network PN' through the ingress link IL. For sake of simplicity, it is assumed that, when the synchronization message SM is sent, the intermediate time counter TC1 and the egress time counter TCE are aligned with respect to the ingress time counter TCI.

Preferably, when the synchronization message SM reaches the ingress node IN, the ingress synchronization interface ISI of the ingress node IN reads the current value t1 * of the ingress time counter TCI and generates an ingress timestamp with the value t1*.

At this time, the ingress synchronization interface ISI preferably encapsulates the synchronization message SM in a transfer message SM' which further comprises the timestamp with the value t1*.

Next the ingress node IN sends the transfer message SM' which, through the intermediate node N1, reaches the egress node EN of the packet-switched network PN'. Preferably, the intermediate node N1 receives the transfer message SM' from the ingress node IN and forwards it to the egress node EN without performing any processing of the ingress timestamp with the value t1*.

When the egress node EN receives the transfer message SM', the egress synchronization interface ESI preferably reads the ingress timestamp with the value t1*, extracts the synchronization message SM and terminates the transfer message SM'. The egress synchronization interface ESI then preferably reads the current value t2* of the output of the egress time counter TCE and generates an egress timestamp with the value t2*. Then it computes a transit time TT as the difference between such egress timestamp and the ingress timestamp, i.e. the difference t2*-t1*, and writes this difference in the adjusting field AF of the header H-SM of the synchronization message SM.

Advantageously, the transit time TT according to this second embodiment is substantially equal to the actual transit time TTE (i.e. the time interval elapsed between the time at which the synchronization message SM has been received by the ingress node IN and the time at which the synchronization message SM has been sent by the egress node EN), since the offset TO between the egress time counter TCE and the ingress time counter TCI is zero. In any case, even if the offset TO between the egress time counter TCE and the ingress time counter TCI is not zero, it is anyway lower than the initial value stE-stI thanks to the exchanges of alignment messages described above.

When the slave node SN receives the synchronization message SM, it preferably reads both the synchronization information contained in it (i.e.. the timestamp t1) and the content of the adjusting field AF which contains the transit time TT. Then, preferably, the slave node SN uses the transit time TT to adjust the value of the timestamp t1 so as to synchronize the frequency and the time of the day of its local clock to the master node MN. This operation will not be described here in greater detail since it is similar to the operation defined by the IEEE 1588™-2008 protocol, and it does not fall within the scope of the present invention.

The accuracy of the time of the day synchronization depends on the period of the reference clock signal generated by the synchronization source apparatus SSA. For example, if the period of this signal is of the order of nanoseconds, the time of the local clock of the slave node SN can be synchronized to the local clock of the master node MN with a resolution of the order of nanoseconds.

Therefore, advantageously, according to this second embodiment, the slave node SN is able to reliably and accurately synchronize both the frequency and the time of the day to the master node MN.

In Figure 4, for sake of simplicity, it has been assumed that only the intermediate node N1 is configured to implement the reduction of the offset of its time counter with respect to the reference time counter. However, preferably, all the nodes of the packet-switched network PN' are configured to implement the offset reduction. This advantageously allows to "propagate" in cascade the reduction of the offset of the time counters with respect to the reference time counter through the entire packet-switched network PN'.

Advantageously, the implementation of the offset reduction at the nodes of the packet-switched network PN' requires a lower amount of hardware and/or software resources than the implementation of the known transparent clock mechanism described above. Indeed, the alignment messages advantageously may have smaller dimensions than the synchronization messages used to implement the transparent clock mechanism. The bandwidth required for the implementation of the offset reduction is thus advantageously lower than the bandwidth required to implement message exchange required for implementing the transparent clock mechanism according to the known IEEE 1588™-2008.

According to advantageous variants not shown in the drawings, the ingress node IN and the egress node EN are preferably provided with respective GPS (Global Positioning System) receivers suitable for receiving a GPS time-of-the-day information. Advantageously, the ingress node IN and the egress node EN may use this GPS time-of-the-day information for aligning their time counters TCI and TCE, respectively. In this case, therefore, the above alignment procedure implemented by exchanging alignment messages is not required.

## Claims

**1.** A method for transferring a synchronization message (SM) from a master node (MN) to a slave node(SN) through a packet-switched network (PN, PN'), said method **characterised by** the steps of:

a) providing a reference clock signal to an ingress node (IN) and to an egress node (EN) of said packet-switched network (PN);
b) at said ingress node (IN), receiving said synchronization message (SM) from said master node (MN), generating an ingress timestamp (t1*) based on said reference clock signal, and sending said synchronization message (SM) with said ingress timestamp (t1*) to said egress node (EN); and
c) at said egress node (EN), receiving said synchronization message (SM) and said ingress timestamp (t1*), generating an egress timestamp (t2*) based on said reference clock signal, computing a transit time (TT) as a difference between said egress timestamp (t2*) and said ingress timestamp (t1*) and sending said synchronization message (SM) and said transit time (TT) to said slave node (SN).

**2.** The method according to claim 1, wherein:

- said step b) comprises receiving said reference clock signal, processing said reference clock signal for generating a first local clock signal having a first period (cpI), and providing an ingress time counter (TCI) counting a number of periods of said first local clock signal; and
- said step c) comprises receiving said reference clock signal, processing said reference clock signal for generating a second local clock signal having a second period (cpE), and providing an egress time counter (TCE) counting a number of periods of said second local clock signal,

said first period (cpI) being substantially equal to said second period (cpE).

**3.** The method according to claim 2, wherein:

- in said step b), said generating comprises reading a first current value (t1*) of said ingress time counter (TCI) and generating said ingress timestamp (t1*) having said first current value (t1*); and
- in said step c), said generating comprises reading a second current value (t2*) of said egress time counter (TCE) and generating said egress timestamp (t2*) having said second current value (t2*).

**4.** The method according to claim 2 or 3, wherein:

- said counting a number of periods of said first local clock signal is started at a first starting time (stI); and
- said counting a number of periods of said second local clock signal is started at a second starting time (stE),

a difference between said first starting time (stI) and said second starting time (stE) being equal to an offset (TO) between said ingress time counter (TCI) and said egress time counter (TCE).

**5.** The method according to claim 4, wherein said method further comprises a step, which is performed substantially in parallel to said steps b) and c), of reducing or cancelling said offset (TO).

**6.** The method according to claim 5, wherein said step of reducing or cancelling said offset (TO) comprises providing said ingress node (IN) and said egress node (EN) with a global positioning system time-of-the-day information.

**7.** The method according to claim 5, wherein said step of reducing or cancelling said offset (TO) comprises exchanging at least one alignment message between said ingress node (IN) and an intermediate node (N1) of said packet-switched network (PN) adjacent to said ingress node (IN).

**8.** The method according to claim 7, wherein step a) further comprises providing said reference clock signal to an intermediate node (N1) of said packet switched network (PN), said method further comprising, at said intermediate node (N1):

- receiving said reference clock signal;
- processing said reference clock signal for generating a third local clock signal having a third period (cp1), said third period (cp1) being substantially equal to said first period (cpI) and said second period (cpE); and
- providing an intermediate time counter (TC1) counting a number of periods of said third local clock signal, said counting being started at a third starting time (st1), a difference between said third starting time (st1) and said first starting time (stI) being equal to a further offset (TO') between said intermediate time counter (TC1) and said ingress time counter (TCI).

**9.** The method according to claim 8, wherein said step of exchanging at least one alignment message between said ingress node (IN) and said intermediate node (N1) comprises cyclically repeating the following sub-steps:

- at said ingress node (IN), generating a first timestamp T1 equal to a third current value of said ingress time counter (TCI) and sending a first alignment message (AM1) to said intermediate node (N1);
- at said ingress node (IN), sending a second alignment message (AM2) containing said first timestamp T1 to said intermediate node (N1);
- at said intermediate node (N1), upon reception of said first alignment message (AM1), generating a second timestamp T2 equal to a fourth current value of said intermediate time counter (TC1) and, upon reception of said second alignment message (AM2), extracting said first timestamp T1 from said second alignment message (AM2);
- at said intermediate node (N1), sending a third alignment message (AM3) to said ingress node (IN) and, substantially at the same time, generating a third timestamp T3 equal to a fifth current value of said intermediate time counter (TC1);
- at said ingress node (IN), upon reception of said third alignment message (AM3), generating a fourth timestamp T4 equal to a sixth current value of said ingress time counter (TCI), and sending to said intermediate node (N1) a fourth alignment message (AM4) comprising said fourth timestamp T4;
- at said intermediate node (N1), upon reception of said fourth alignment message (AM4), extracting said fourth timestamp T4 from said fourth alignment message (AM4) and computing an average one-way delay D1 by means of the following equation:

$$D1 = \frac{(T2 - T1) + (T4 - T3)}{2}$$

and a still further offset TO1 by means of the following equation:

$$TO1 = (T2 - T1) - D1 = \frac{(T2 - T1) - (T4 - T3)}{2};$$

- at said intermediate node (N1), writing said average one-way delay D1 in a FIFO buffer having size N, and writing said still further offset TO1 in a further FIFO buffer having said size N;
- at said intermediate node (N1), determining a minimum delay D* in the FIFO buffer, and determining a corresponding offset TO* corresponding to said minimum delay D* in said further FIFO buffer; and
- at said intermediate node (N1), using said corresponding offset TO* in order to reduce said further offset (TO') between said intermediate time counter (TC1) and said ingress time counter (TCI).

**10.** The method according to any of the preceding claims, wherein:

- in said step b), said sending comprises encapsulating said synchronization message (SM) and said ingress timestamp (t1*) in a transfer message (SM'); and
- in said step c), said receiving comprises extracting said synchronization message (SM) and said ingress timestamp (t1*) from said transfer message (SM').

**11.** The method according to any of claims 1 to 9, wherein:

- in said step b), said sending comprises inserting said ingress timestamp (t1*) in a body (B-SM) of said synchronization message (SM); and
- in said step c), said receiving comprises extracting said ingress timestamp (t1*) from said body (B-SM) of said synchronization message (SM).

**12.** The method according to any of the preceding claims, wherein in said step c), said sending comprises writing said transit time (TT) in an adjusting field (AF) of a header (H-SM) of said synchronization message (SM).

**13.** A communication system (CS) comprising a packet-switched network (PN, PN'), a master node (MN) and a slave node (SN), said packet-switched network (PN) comprising an ingress node (IN) connected to said master node (MN) and an egress node (EN) connected to said slave node (SN), said communication system (CS) further comprising a synchronization source apparatus (SSA) cooperating with said packet-switched network (PN), **characterised by**:

- said synchronization source apparatus (SSA) is configured to provide a reference clock signal to said ingress node (IN) and to said egress node (EN);
- said master node (MN) is configured to transmit a synchronization message (SM) to said slave node (SN) through said ingress node (IN) and said egress node (EN);
- said ingress node (IN) is configured to receive said synchronization message (SM) from said master node (MN), to generate an ingress timestamp (t1*) based on said reference clock signal, and to send said synchronization message (SM) with said ingress timestamp (t1*) to said egress node (EN); and
- said egress node (EN) is configured to receive said synchronization message (SM) and said ingress timestamp (t1*) from said ingress node (IN), to generate an egress timestamp (t2*) based on said reference clock signal, to compute a transit time (TT) as a difference between said egress timestamp (t2*) and said ingress timestamp (t1*) and to send said synchronization message (SM) and said transit time (TT) to said slave node (SN).

**14.** The communication system (CS) according to claim 13, wherein said synchronization source apparatus (SSA) is a node of said packet-switched network (PN) or an apparatus cooperating with said packet-switched network (PN).

**15.** The communication system (CS) according to claim 13 or 14, wherein:

- said ingress node (IN) comprises an ingress local oscillator (ILO) and an ingress time counter (TCI) connected to said ingress local oscillator (ILO), wherein said ingress local oscillator (ILO) is configured to receive said reference clock signal and to process said reference clock signal for generating a first local clock signal having a first period (cpI), and wherein said ingress time counter (TCI) is configured to count a number of periods of said first local clock signal; and
- said egress node (EN) comprises an egress local oscillator (ELO) and an egress time counter (TCE) connected to said egress local oscillator (ELO), wherein said egress local oscillator (ELO) is configured to receive said reference clock signal and to process said reference clock signal for generating a second local clock signal having a second period (cpE), and wherein said egress time counter (TCE) is configured to count a number of periods of said second local clock signal.

## Patentansprüche

1. Verfahren zum Übertragen einer Synchronisierungsnachricht (SM) von einem Master-Knoten (MN) an einen Slave-Knoten (SN) über ein paketvermitteltes Netzwerk (PN, PN'), wobei das Verfahren durch die folgenden Schritte **gekennzeichnet** ist:

   a) Bereitstellen eines Referenz-Taktsignals an einen Eingangsknoten (IN) und an einen Ausgangsknoten (EN) des besagten paketvermittelten Netzwerks (PN);
   b) an dem besagten Eingangsknoten (IN), Empfangen der besagten Synchronisierungsnachricht (SM) von dem besagten Master-Knoten (MN), Erzeugen eines Eingangszeitstempels (t1*) auf der Basis des besagten Referenz-Taktsignals, und Senden der besagten Synchronisierungsnachricht (SM) mit dem besagten Eingangszeitstempel (t1*) an den besagten Ausgangsknoten (EN); und
   c) an dem besagten Ausgangsknoten (EN), Empfangen der besagten Synchronisierungsnachricht (SM) und des besagten Eingangszeitstempels (t1*), Erzeugen eines Ausgangszeitstempels (t2*) auf der Basis des besagten Referenz-Taktsignals, Berechnen einer Laufzeit (TT) als eine Differenz zwischen dem besagten Ausgangszeitstempel (t2*) und dem besagten Eingangszeitstempel (t1*), und Senden der besagten Synchronisierungsnachricht (SM) und der besagten Laufzeit (TT) an den besagten Slave-Knoten (SN).

2. Verfahren nach Anspruch 1, wobei:

   - Der besagte Schritt b) das Empfangen des besagten Referenz-Taktsignals, das Verarbeiten des besagten Referenz-Taktsignals, um ein erstes lokales Taktsignal mit einer ersten Periode (cpl) zu erzeugen, und das Bereitstellen eines Eingangszeitzählers (TCI), welcher eine Anzahl von Perioden des besagten ersten lokalen Taktsignals zählt, umfasst; und
   - der besagte Schritt c) das Empfangen des besagten Referenz-Taktsignals, das Verarbeiten des besagten Referenz-Taktsignals, um ein zweites lokales Taktsignal mit einer zweiten Periode (cpE) zu erzeugen, und das Bereitstellen eines Ausgangszeitzählers (TCE), welcher eine Anzahl von Perioden des besagten zweiten lokalen Taktsignals zählt, umfasst,

   wobei die besagte erste Periode (cpI) im Wesentlichen der besagten zweiten Periode (cpE) entspricht.

3. Verfahren nach Anspruch 2, wobei:

   - In dem besagten Schritt b) das besagte Erzeugen das Ablesen eines ersten momentanen Wertes (t1*) von dem besagten Eingangszeitzähler (TCI) und das Erzeugen des besagten Eingangszeitstempels (t1*) mit dem besagten ersten momentanen Wert (t1*) umfasst; und
   - in dem besagten Schritt c) das besagte Erzeugen das Ablesen eines zweiten momentanen Wertes (t2*) von dem besagten Ausgangszeitzähler (TCE) und das Erzeugen des besagten Ausgangszeitstempel (t2*) mit dem besagten zweiten momentanen Wert (t2*) umfasst.

4. Verfahren nach Anspruch 2 oder 3, wobei:

   - Das besagte Zählen einer Anzahl von Perioden des besagten ersten lokalen Taktsignals zu einem ersten Startzeitpunkt gestartet wird (stI); und
   - das besagte Zählen einer Anzahl von Perioden des besagten zweiten lokalen Taktsignals zu einem zweiten Startzeitpunkt gestartet wird (stE),

   wobei eine Differenz zwischen dem besagten ersten Startzeitpunkt (stI) und dem besagten zweiten Startzeitpunkt (stE) einem Versatz (TO) zwischen dem besagten Eingangszeitzähler (TCI) und dem besagten Ausgangszeitzähler (TCE) entspricht.

5. Verfahren nach Anspruch 4, wobei das besagte Verfahren weiterhin einen Schritt des Reduzierens oder Unterdrükkens des besagten Versatzes (TO) umfasst, welcher im Wesentlichen parallel zu den besagten Schritten b) und c) ausgeführt wird.

6. Verfahren nach Anspruch 5, wobei der besagte Schritt des Reduzierens oder Unterdrückens des besagten Versatzes (TO) das Bereitstellen einer Tageszeitinformation des globalen Positionsbestimmungssystems an den besagten Eingangsknoten (IN) und den besagten Ausgangsknoten (EN) umfasst.

**7.** Verfahren nach Anspruch 5, wobei der besagte Schritt des Reduzierens oder Unterdrückens des besagten Versatzes (TO) das Austauschen mindestens einer Alignierungsnachricht zwischen dem besagten Eingangsknoten (IN) und einem Zwischenknoten (N1) des besagten paketvermittelten Netzwerks (PN), welcher mit dem besagten Eingangsknoten (IN) benachbart ist, umfasst.

**8.** Verfahren nach Anspruch 7, wobei Schritt a) weiterhin das Bereitstellen des besagten Referenz-Taktsignals an einen Zwischenknoten (N1) des besagten paketvermittelten Netzwerks (PN) umfasst, wobei das besagte Verfahren an dem besagten Zwischenknoten (N1) weiterhin umfasst:

- Empfangen des besagten Referenz-Taktsignals;
- Verarbeiten des besagten Referenz-Taktsignals, um ein drittes lokales Taktsignal mit einer dritten Periode (cp1) zu erzeugen, wobei die besagte dritte Periode (cp1) im Wesentlichen der besagten ersten Periode (cpl) und der besagten zweiten Periode (cpE) entspricht; und
- Bereitstellen eines Zwischenzeitzählers (TC1), welcher eine Anzahl von Perioden des besagten dritten lokalen Taktsignals zählt, wobei das besagte Zählen zu einem dritten Startzeitpunkt gestartet wird (st1), wobei eine Differenz zwischen dem besagten dritten Startzeitpunkt (st1) und dem besagten ersten Startzeitpunkt (stl) einem weiteren Versatz (T0') zwischen dem besagten Zwischenzeitzähler (TC1) und dem besagten Eingangszeitzähler (TCI) entspricht.

**9.** Verfahren nach Anspruch 8, wobei der besagte Schritt des Austauschens mindestens einer Alignierungsnachricht zwischen dem besagten Eingangsknoten (IN) und dem besagten Zwischenknoten (N1) das zyklische Wiederholen der folgenden Teilschritte umfasst:

- An dem besagten Eingangsknoten (IN), Erzeugen eines ersten Zeitstempels T1, welcher einem dritten momentanen Wert des besagten Eingangszeitzählers (TCI) entspricht, und Senden einer ersten Alignierungsnachricht (AM1) an den besagten Zwischenknoten (N1);
- an dem besagten Eingangsknoten (IN), Senden einer zweiten Alignierungsnachricht (AM2), welche den besagten ersten Zeitstempel T1 enthält, an den besagten Zwischenknoten (N1);
- an dem besagten Zwischenknoten (N1), bei Empfang der besagten ersten Alignierungsnachricht (AM1), Erzeugen eines zweiten Zeitstempels T2, welcher einem vierten momentanen Wert des besagten Zwischenzeitzähler (TC1) entspricht, und, bei Empfang der besagten zweiten Alignierungsnachricht (AM2), Extrahieren des besagten ersten Zeitstempels T1 aus der besagten zweiten Alignierungsnachricht (AM2);
- an dem besagten Zwischenknoten (N1), Senden einer dritten Alignierungsnachricht (AM3) an den besagten Eingangsknoten (IN) und, im Wesentlichen zeitgleich, Erzeugen eines dritten Zeitstempels T3, welcher einem fünften momentanen Wert des besagten Zwischenzeitzählers (TC1) entspricht;
- an dem besagten Eingangsknoten (IN), bei Empfang der besagten dritten Alignierungsnachricht (AM3), Erzeugen eines vierten Zeitstempels T4, welcher einem sechsten momentanen Wert des besagten Eingangszeitzählers (TCI) entspricht, und Senden einer vierten Alignierungsnachricht (AM4), welche den besagten vierten Zeitstempel T4 enthält, an den besagten Zwischenknoten (N1);
- an dem besagten Zwischenknoten (N1), bei Empfang der besagten vierten Alignierungsnachricht (AM4), Extrahieren des besagten vierten Zeitstempels T4 aus der besagten vierten Alignierungsnachricht (AM4), und Berechnen einer durchschnittlichen Einweg-Verzögerung D1 anhand der folgenden Gleichung:

$$D1 = \frac{(T2 - T1) + (T4 - T3)}{2}$$

und eines noch weiteren Versatzes TO1 anhand der folgenden Gleichung:

$$TO1 = (T2 - T1) - D1 = \frac{(T2 - T1) - (T4 - T3)}{2};$$

- an dem besagten Zwischenknoten (N1), Schreiben der besagten durchschnittlichen Einweg-Verzögerung D1 in einen FIFO-Puffer einer Größe N, und Schreiben des besagten noch weiteren Versatzes TO1 in einen weiteren FIFO-Puffer, welcher die besagte Größe N aufweiset;
- an dem besagten Zwischenknoten (N1), Bestimmen einer Mindestverzögerung D* in dem FIFO-Puffer, und Bestimmen eines entsprechenden Versatzes TO*, welcher der besagten Mindestverzögerung D* in dem besagten weiteren FIFO-Puffer entspricht; und
- an dem besagten Zwischenknoten (N1), Verwenden des besagten entsprechenden Versatzes TO*, um den besagten weiteren Versatz (TO') zwischen dem besagten Zwischenzeitzähler (TC1) und dem besagten Eingangszeitzähler (TCI) zu verringern.

**10.** Verfahren nach einem beliebigen der vorstehenden Ansprüche, wobei:

- in dem besagten Schritt b) das besagte Senden das Einkapseln der besagten Synchronisierungsnachricht (SM) und des besagten Eingangszeitstempels (t1*) in eine Transfer-Nachricht (SM') umfasst; und
- in dem besagten Schritt c) das besagte Empfangen das Extrahieren der besagten Synchronisierungsnachricht (SM) und des besagten Eingangszeitstempels (t1*) aus der besagten Transfer-Nachricht (SM') umfasst.

**11.** Verfahren nach einem beliebigen der Ansprüche 1 bis 9, wobei:

- in dem besagten Schritt b) das besagte Senden das Einfügen des besagten Eingangszeitstempels (t1*) in einen Körper (B-SM) der besagten Synchronisierungsnachricht (SM) umfasst; und
- in dem besagten Schritt c) das besagte Empfangen das Extrahieren des besagten Eingangszeitstempels (t1*) aus dem besagten Körper (B-SM) der besagten Synchronisierungsnachricht (SM) umfasst.

**12.** Verfahren nach einem beliebigen der vorstehenden Ansprüche, wobei in dem besagten Schritt c) das besagte Senden das Schreiben der besagten Laufzeit (TT) in ein Einstellfeld (AF) eines Headers (H-SM) der besagten Synchronisierungsnachricht (SM) umfasst.

**13.** Kommunikationssystem (CS), umfassend ein paketvermitteltes Netzwerk (PN, PN'), einen Master-Knoten (MN) und einen Slave-Knoten (SN), wobei das besagte paketvermittelte Netzwerk (PN) einen Eingangsknoten (IN), der mit dem besagten Master-Knoten (MN) verbunden ist, und einen Ausgangsknoten (EN), der mit dem besagten Slave-Knoten (SN) verbunden ist, umfasst, wobei das besagte Kommunikationssystem (CS) weiterhin eine Quellensynchronisationseinrichtung (SSA), welche mit dem besagten paketvermittelten Netzwerk (PN) zusammenwirkt, umfasst, **dadurch gekennzeichnet, dass**:

- die besagte Quellensynchronisationseinrichtung (SSA) für die Bereitstellung eines Referenz-Taktsignals an den besagten Eingangsknoten (IN) und an den besagten Ausgangsknoten (EN) konfiguriert ist;
- der besagte Master-Knoten (MN) für die Übertragung, über den besagten Eingangsknoten (IN) und den besagten Ausgangsknoten (EN), einer Synchronisierungsnachricht (SM) an den besagten Slave-Knoten (SN) konfiguriert ist;
- der besagte Eingangsknoten (IN) für den Empfang der besagten Synchronisierungsnachricht (SM) von dem besagten Master-Knoten (MN), für das Erzeugen eines Eingangszeitstempel (t1*) auf der Basis des besagten Referenz-Taktsignals und für das Senden der besagten Synchronisierungsnachricht (SM) mit dem besagten Eingangszeitstempel (t1*) an den besagten Ausgangsknoten (EN) konfiguriert ist; und
- der besagte Ausgangsknoten (EN) für den Empfang der besagten Synchronisierungsnachricht (SM) und des besagten Eingangszeitstempels (t1*) von dem besagten Eingangsknoten (IN), für das Erzeugen eines Ausgangszeitstempel (t2*) auf der Basis des besagten Referenz-Taktsignals, für das Berechnen einer Laufzeit (TT) als eine Differenz zwischen dem besagten Ausgangszeitstempel (t2*) und dem besagten Eingangszeitstempel (t1*) und für das Senden der besagten Synchronisierungsnachricht (SM) und der besagten Laufzeit (TT) an den besagten Slave-Knoten (SN) konfiguriert ist.

**14.** Kommunikationssystem (CS) nach Anspruch 13, wobei die besagte Quellensynchronisationseinrichtung (SSA) ein Knoten des besagten paketvermittelten Netzwerks (PN) oder eine Einrichtung, welche mit dem besagten paketvermittelten Netzwerk (PN) zusammenwirkt, ist.

**15.** Kommunikationssystem (CS) nach Anspruch 13 oder 14, wobei:

- Der besagte Eingangsknoten (IN) einen lokalen Eingangsoszillator (ILO) und einen Eingangszeitzähler (TCI), welcher an den besagten lokalen Eingangsoszillator (ILO) angeschlossen ist, umfasst, wobei der besagte lokale Eingangsoszillator (ILO) für den Empfang des besagten Referenz-Taktsignals und für die Verarbeitung des besagten Referenz-Taktsignals, um ein erstes lokales Taktsignal mit einer ersten Periode (cpl) zu erzeugen, konfiguriert ist, und wobei der besagte Eingangszeitzähler (TCI) für das Zählen einer Anzahl von Perioden des besagten ersten lokalen Taktsignals konfiguriert ist; und

- der besagte Ausgangsknoten (EN) einen lokalen Ausgangsoszillator (ELO) und einen Ausgangszeitzähler (TCE), welcher an den besagten lokalen Ausgangsoszillator (ELO) angeschlossen ist, umfasst, wobei der besagte lokale Ausgangsoszillator (ELO) für den Empfang des besagten Referenz-Taktsignals und für die Verarbeitung des besagten Referenz-Taktsignals, um ein zweites lokales Taktsignal mit einer zweiten Periode (cpE) zu erzeugen, konfiguriert ist, und wobei der besagte Ausgangszeitzähler (TCE) für das Zählen einer Anzahl von Perioden des besagten zweiten lokalen Taktsignals konfiguriert ist.

## Revendications

**1.** Procédé de transfert d'un message de synchronisation (SM) à partir d'un noeud maître (MN) vers un noeud esclave SN) par l'intermédiaire d'un réseau à commutation de paquets (PN, PN'), ledit procédé étant **caractérisé par** les étapes suivantes :

a) fournir un signal d'horloge de référence à un noeud d'entrée (IN) et à un noeud de sortie (EN) dudit réseau à commutation de paquets (PN) ;
b) au niveau dudit noeud d'entrée (IN), recevoir ledit message de synchronisation (SM) provenant dudit noeud maître (MN), générer une estampille temporelle d'entrée (t1*) basée sur ledit signal d'horloge de référence, et envoyer ledit message de synchronisation (SM) avec ladite estampille temporelle d'entrée (t1*) audit noeud de sortie (EN) ; et
c) au niveau dudit noeud de sortie (EN), recevoir ledit message de synchronisation (SM) et ladite estampille temporelle d'entrée (t1*), générer une estampille temporelle de sortie (t2*) basée sur ledit signal d'horloge de référence, calculer un temps de transit (TT) comme une différence entre ladite estampille temporelle de sortie (t2*) et ladite estampille temporelle d'entrée (t1*) et envoyer ledit message de synchronisation (SM) et ledit temps de transit (TT) audit noeud esclave (SN).

**2.** Procédé selon la revendication 1, dans lequel :

- ladite étape b) comprend la réception dudit signal d'horloge de référence, le traitement dudit signal d'horloge de référence pour générer un premier signal d'horloge local présentant une première période (cpI), et la fourniture d'un compteur de temps d'entrée (TCI) comptant un nombre de périodes dudit premier signal d'horloge local ; et
- ladite étape c) comprend la réception dudit signal d'horloge de référence, le traitement dudit signal d'horloge de référence pour générer un deuxième signal d'horloge local présentant une deuxième période (cpE), et la fourniture d'un compteur de temps de sortie (TCE) comptant un nombre de périodes dudit deuxième signal d'horloge local,

ladite première période (cpI) étant sensiblement égale à ladite deuxième période (cpE).

**3.** Procédé selon la revendication 2, dans lequel :

- dans ladite étape b), ladite génération comprend la lecture d'une première valeur actuelle (t1*) dudit compteur de temps d'entrée (TCI) et la génération de ladite estampille temporelle d'entrée (t1*) présentant ladite première valeur actuelle (t1*) ; et
- dans ladite étape c), ladite génération comprend la lecture d'une deuxième valeur actuelle (t2*) dudit compteur de temps de sortie (TCE) et la génération de ladite estampille temporelle de sortie (t2*) présentant ladite deuxième valeur actuelle (t2*).

**4.** Procédé selon la revendication 2 ou 3, dans lequel :

- ledit comptage d'un nombre de périodes dudit premier signal d'horloge local démarre à un premier temps de démarrage (stI) ; et
- ledit comptage d'un nombre de périodes dudit deuxième signal d'horloge local démarre à un deuxième temps de démarrage (stE),

une différence entre ledit premier temps de démarrage (stI) et ledit deuxième temps de démarrage (stE) étant égal à un décalage (TO) entre ledit compteur de temps d'entrée (TCI) et ledit compteur de temps de sortie (TCE).

**5.** Procédé selon la revendication 4, dans lequel ledit procédé comprend en outre une étape, qui est exécutée sensiblement en parallèle desdites étapes b) et c), de réduction ou d'annulation dudit décalage (TO).

6. Procédé selon la revendication 5, dans lequel ladite étape de réduction ou d'annulation dudit décalage (TO) comprend la fourniture dudit noeud d'entrée (IN) et dudit noeud de sortie (EN) avec des informations sur l'heure du jour d'un système de positionnement global.

7. Procédé selon la revendication 5, dans lequel ladite étape de réduction ou d'annulation dudit décalage (TO) comprend l'échange d'au moins un message d'alignement entre ledit noeud d'entrée (IN) et un noeud intermédiaire (N1) dudit réseau à commutation de paquets (PN) adjacent audit noeud d'entrée (IN).

8. Procédé selon la revendication 7, dans lequel l'étape a) comprend en outre la fourniture dudit signal d'horloge de référence à un noeud intermédiaire (N1) dudit réseau à commutation de paquets (PN), ledit procédé comprenant en outre, au niveau dudit noeud intermédiaire (N1), les étapes suivantes :

- recevoir ledit signal d'horloge de référence ;
- traiter ledit signal d'horloge de référence pour générer un troisième signal d'horloge local présentant une troisième période (cp1), ladite troisième période (cp1) étant sensiblement égale à ladite première période (cpI) et à ladite deuxième période (cpE) ; et
- fournir un compteur de temps intermédiaire (TC1) comptant un nombre de périodes dudit troisième signal d'horloge local, ledit comptage commençant à un troisième temps de démarrage (st1), une différence entre ledit troisième temps de démarrage (st1) et ledit premier temps de démarrage (stI) étant égale à un autre décalage (TO') entre ledit compteur de temps intermédiaire (TC1) et ledit compteur de temps d'entrée (TCI).

9. Procédé selon la revendication 8, dans lequel ladite étape d'échange d'au moins un message d'alignement entre ledit noeud d'entrée (IN) et ledit noeud intermédiaire (N1) comprend la répétition cyclique des sous-étapes suivantes :

- au niveau dudit noeud d'entrée (IN), générer une première estampille temporelle T1 égale à une troisième valeur actuelle dudit compteur de temps d'entrée (TCI) et envoyer un premier message d'alignement (AM1) audit noeud intermédiaire (N1) ;
- au niveau dudit noeud d'entrée (IN), envoyer un deuxième message d'alignement (AM2) contenant ladite première estampille temporelle T1 audit noeud intermédiaire (N1);
- au niveau dudit noeud intermédiaire (N1), lors de la réception dudit premier message d'alignement (AM1), générer une deuxième estampille temporelle T2 égale à une quatrième valeur actuelle dudit compteur de temps intermédiaire (TC1) et, lors de la réception dudit deuxième message d'alignement (AM2), extraire ladite première estampille temporelle T1 dudit deuxième message d'alignement (AM2) ;
- au niveau dudit noeud intermédiaire (N1), envoyer un troisième message d'alignement (AM3) audit noeud d'entrée (IN) et, sensiblement en même temps, générer une troisième estampille temporelle T3 égale à une cinquième valeur actuelle dudit compteur de temps intermédiaire (TC1) ;
- au niveau dudit noeud d'entrée (IN), lors de la réception dudit troisième message d'alignement (AM3), générer une quatrième estampille temporelle T4 égale à une sixième valeur actuelle dudit compteur de temps d'entrée (TCI), et envoyer audit noeud intermédiaire (N1) un quatrième message d'alignement (AM4) comprenant ladite quatrième estampille temporelle T4 ;
- au niveau dudit noeud intermédiaire (N1), lors de la réception dudit quatrième message d'alignement (AM4), extraire ladite quatrième estampille temporelle T4 dudit quatrième message d'alignement (AM4) et calculer un délai unidirectionnel moyen D1 au moyen de l'équation suivante :

$$D1 = \frac{(T2 - T1) + (T4 - T3)}{2}$$

et encore un autre décalage TO1 au moyen de l'équation suivante :

$$TO1 = (T2 - T1) - D1 = \frac{(T2 - T1) - (T4 - T3)}{2};$$

- au niveau dudit noeud intermédiaire (N1), écrire ledit délai unidirectionnel moyen D1 dans un tampon FIFO présentant une taille N, et écrire ledit encore autre décalage TO1 dans un autre tampon FIFO présentant ladite taille N ;
- au niveau dudit noeud intermédiaire (N1), déterminer un délai minimum D* dans le tampon FIFO, et déterminer un décalage correspondant TO* correspondant audit délai minimum D* dans ledit autre tampon FIFO ; et
- au niveau dudit noeud intermédiaire (N1 utiliser ledit décalage correspondant TO* afin de réduire ledit autre décalage (TO') entre ledit compteur de temps intermédiaire (TC1) et ledit compteur de temps d'entrée (TCI).

**10.** Procédé selon l'une quelconque des revendications précédentes, dans lequel :

- dans ladite étape b), ledit envoi comprend l'encapsulation dudit message de synchronisation (SM) et de ladite estampille temporelle d'entrée (t1*) dans un message de transfert (SM') ; et
- dans ladite étape c), ladite réception comprend l'extraction dudit message de synchronisation (SM) et de ladite estampille temporelle d'entrée (t1*) à partir dudit message de transfert (SM').

**11.** Procédé selon l'une quelconque des revendications 1 à 9, dans lequel :

- dans ladite étape b), ledit envoi comprend l'insertion de ladite estampille temporelle d'entrée (t1*) dans un corps (B-SM) dudit message de synchronisation (SM) ; et
- dans ladite étape c), ladite réception comprend l'extraction de ladite estampille temporelle d'entrée (t1*) à partir dudit corps (B-SM) dudit message de synchronisation (SM).

**12.** Procédé selon l'une quelconque des revendications précédentes, dans lequel dans ladite étape c), ledit envoi comprend l'écriture dudit temps de transit (TT) dans un champ d'ajustement (AF) d'un en-tête (H-SM) dudit message de synchronisation (SM).

**13.** Système de communication (CS) comprenant un réseau à commutation de paquets (PN, PN'), un noeud maître (MN) et un noeud esclave (SN), ledit réseau à commutation de paquets (PN) comprenant un noeud d'entrée (IN) connecté audit noeud maître (MN) et un noeud de sortie (EN) connecté audit noeud esclave (SN), ledit système de communication (CS) comprenant en outre un appareil de source de synchronisation (SSA) coopérant avec ledit réseau à commutation de paquets (PN), **caractérisé en ce que**

- ledit appareil de source de synchronisation (SSA) est configuré pour fournir un signal d'horloge de référence audit noeud d'entrée (IN) et audit noeud de sortie (EN) ;
- ledit noeud maître (MN) est configuré pour transmettre un message de synchronisation (SM) audit noeud esclave (SN) par l'intermédiaire dudit noeud d'entrée (IN) et dudit noeud de sortie (EN) ;
- ledit noeud d'entrée (IN) est configuré pour recevoir ledit message de synchronisation (SM) provenant dudit noeud maître (MN), pour générer une estampille temporelle d'entrée (t1*) basée sur ledit signal d'horloge de référence, et pour envoyer ledit message de synchronisation (SM) avec ladite estampille temporelle d'entrée (t1*) audit noeud de sortie (EN) ; et
- ledit noeud de sortie (EN) est configuré pour recevoir ledit message de synchronisation (SM) et ladite estampille temporelle d'entrée (t1*) provenant dudit noeud d'entrée (IN), pour générer une estampille temporelle de sortie (t2*) basée sur ledit signal d'horloge de référence, pour calculer un temps de transit (TT) comme une différence entre ladite estampille temporelle de sortie (t2*) et ladite estampille temporelle d'entrée (t1*) et pour envoyer ledit message de synchronisation (SM) et ledit temps de transit (TT) audit noeud esclave (SN).

**14.** Système de communication (CS) selon la revendication 13, dans lequel ledit appareil de source de synchronisation (SSA) est un noeud dudit réseau à commutation de paquets (PN) ou un appareil coopérant avec ledit réseau à commutation de paquets (PN).

**15.** Système de communication (CS) selon la revendication 13 ou 14, dans lequel :

- ledit noeud d'entrée (IN) comprend un oscillateur local d'entrée (ILO) et un compteur de temps d'entrée (TCI) connecté audit oscillateur local d'entrée (ILO), dans lequel ledit oscillateur local d'entrée (ILO) est configuré pour recevoir ledit signal d'horloge de référence et pour traiter ledit signal d'horloge de référence afin de générer un premier signal d'horloge local présentant une première période (cpl), et dans lequel ledit compteur de temps d'entrée (TCI) est configuré pour compter un nombre de périodes dudit premier signal d'horloge local ; et
- ledit noeud de sortie (EN) comprend un oscillateur local de sortie (ELO) et un compteur de temps de sortie (TCE) connecté audit oscillateur local de sortie (ELO), dans lequel ledit oscillateur local de sortie (ELO) est configuré pour recevoir ledit signal d'horloge de référence et pour traiter ledit signal d'horloge de référence afin de générer un deuxième signal d'horloge local présentant une deuxième période (cpE), et dans lequel ledit compteur de temps de sortie (TCE) est configuré pour compter un nombre de périodes dudit deuxième signal d'horloge local.

CS
MN
SM
IL
IN
ISI
TCI
IC
ILO
PN
SM'
SSA
EN
ESI
TCE
EC
ELO
SM
EL
SN

Figure 1

count
time
TCE
TT
t2*
TCI
cpE
TTE
TO
t1*
cpI
stE
stI
EN transmits SM
IN receives SM

Figure 2

SM'
SM
AF
...
t1
...
t1*
H-SM
B-SM
SM
AF
...
t1
...
H-SM
B-SM
SM
AF=t2*-t1*
...
t1
...
H-SM
B-SM

Figure 3b

Figure 3a

Figure 3c

CS'
PN'
IN
N1
EN
SM
SM
MN
ISI
SI1
ESI
SN
IL
TCI
TC1
TCE
EL
IC
C1
EC
ILO
LO1
ELO
SSA

Figure 4

start
send AM1 to N1 and generate T1
500
send AM2 comprising T1
501
receive AM3 and generate T4
504
send AM4 comprising T4
506
receive AM1 and generate T2
502
receive AM2 and read T1
503
send AM3 to N1 and generate T3
505
receive AM4 and read T4
507
calculate D1 and TO1
508
end

Figure 5

TC1
TO*
TCl
TO'
count
time
st1
stl


Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050207387 A1
- US 20050058159 A1


### Non-patent literature cited in the description


- IEEE Standard for a Precision Clock Synchronization Protocol for Networked Measurements and Control Systems. *IEEE Instrumentation and Measurements Society,* 24 July 2008